(19) Europäisches Patentamt
European Patent Office
Office européen des brevets

(11) EP 0 731 232 A2

(12) **EUROPEAN PATENT APPLICATION**

(43) Date of publication:
11.09.1996 Bulletin 1996/37

(21) Application number: 96301555.7

(22) Date of filing: 06.03.1996

(51) Int Cl.6: **E04B 1/66**, B32B 7/02, B32B 11/00, B29D 9/00 // B29K105:04, B29K105:24, B29K105:26

(84) Designated Contracting States:
**DE ES FR IT**

(30) Priority: 07.03.1995 US 400145

(71) Applicant: **W.R. Grace & Co.-Conn.**
**New York New York 10036 (US)**

(72) Inventors:
• **Jenkins, Robert Francis**
**Wakefield, Massachusetts 01880 (US)**
• **Havens, Marvin Russell**
**Greer, South Carolina 29650 (US)**

• **Wiercinski, Robert Alan**
**Lincoln, Massachusetts 01773 (US)**
• **Chetan, Makam S.**
**Dracut, Massachusetts 01826 (US)**
• **Becraft, Michael Lee**
**Woodstock, Maryland 21163 (US)**
• **Leon, Craig Kimbal**
**Cambridge, Massachusetts 02142 (US)**

(74) Representative: **Senior, Alan Murray et al**
**J.A. KEMP & CO.,**
**14 South Square,**
**Gray's Inn**
**London WC1R 5LX (GB)**

(54) **Method for protecting waterproofed substrate surfaces and structures for accomplishing same**

(57) Method for waterproofing and protecting a water-penetrable surface comprises the steps of applying a waterproofing agent (12), preferably a preformed waterproofing laminate comprising a waterproofing composition membrane layer (14) and a carrier support sheet (16), onto a substrate surface (10) such as a subgrade vertical concrete wall, and subsequently placing against the waterproofed surface a protective non-friable extruded thermoplastic synthetic polymer sheet (18). The extruded sheet may comprise virgin or scrap thermoplastic polymer materials such as polyethylene, polypropylene, a polyamide, or a combination thereof and may be a foamed material. Scrap materials may be cross-linked or even highly cross-linked. Waterproofing structures associated with the method are also disclosed.

FIG. I

## Description

### Field of the Invention

This invention relates to novel waterproofing structures, and more particularly to methods and structures for protecting waterproofed surfaces from the impact of stones, rocks, or other objects contained in soil backfilled against the waterproofed surface. Exemplary methods and structures of the invention comprise the use of an extruded non-friable thermoplastic synthetic polymer protective sheet. Preferably, the sheet comprises a reclaim scrap such as a polyolefin, nylon, polyvinylidene chloride and/or ethylene vinyl acetate. Exemplary protective sheets can be positioned over waterproofing agents such as preformed membrane laminates. Further exemplary embodiments employ foamed (e.g., reactively extruded) thermoplastic protective sheets.

### Background of the Invention

It is known that building surfaces, such as concrete foundations, can be sealed in a waterproof manner by placing thereupon a continuous membrane of a bituminous composition which is substantially impermeable to moisture. The term "bituminous composition" as used in the present disclosure refers to compositions based on tar, asphalt, or pitch, with or without added components. Such waterproofing membranes have been formed by in situ application of a hot bituminous composition or of a cold solution of bitumen, tar, or pitch.

More recently, the waterproofing of substructural members is accomplished by the use of flexible, preformed membranes of waterproofing pressure-sensitive adhesives, such as disclosed in U.S. Patents 3,741,856, 3,853,682, and 3,900,102 of Hurst. These waterproofing materials have a laminate structure comprising a sheet-like support member having a membrane of a flexible bituminous composition superimposed thereon. The bituminous composition has adhesive properties which render it adherent to the support and to the substrate material to which it is applied. Typically, a siliconized protective release sheet is releasably adhered to the bituminous layer on the opposite side of the support sheet, and is removed prior to installation of the exposed bitumen upon the surface being waterproofed.

It has been known that a wide variety of materials can be used as the sheet-like carrier support which forms part of the waterproofing membrane laminate. Preferred supports have been films of synthetic organic polymers such as polyethylene, polypropylene, or other polyolefins, a polyamide, a polyester such as polyethylene terephthalate, polyurethanes, and polyvinyl chloride and polyvinylidene chloride. Another preferred film material is cross-laminated oriented polyethylene film.

Once the waterproofing membrane laminate has been applied upon a vertical sub-grade building surface, it has been customary in the construction industry to place protection boards against the outward-facing support film to protect the waterproofing membrane from the degrading effects of sunlight, and, more significantly, from impacts due to stones or rocks contained in soil which is backfilled against the installed membrane.

One common protection board, used particularly in vertical applications, is made from compressed beads of expanded polystyrene. This bead board is typically used in one-inch thicknesses. These boards are commercially available with and without outer polyester skin layers which are extremely friable. However, such protection boards are extremely light in weight and provide a degree of protection from physical damage due to backfilled soil. However, they are friable; in other words, they crumble when subjected to rough handling. For example, on concrete foundations, there are occasional surface irregularities that might create potential cracking or tearing points for boards that are mounted against the surface. Extruded (foam) polystyrene boards with a slightly higher density are also used in thicknesses of about one quarter-inch for impact protection. Although somewhat denser than the bead board, these are also subjected to possible ripping or tearing in the face of rough handling or environmental conditions. Polystyrene boards tend to be used in large board sizes, such as four-by-eight foot panels, and present handling and transportation problems because of their bulk and stiffness.

Another form of protection board has been asphaltic hardboards. These have been used in thickness of at least one-eighth inch and greater. But they tend to have high densities because they contain bitumen and inorganic fillers sandwiched between mesh or film layers. They are stiff, heavy, and difficult to handle.

Nonwoven fabrics, such as roofing felts and open weave carpet fabrics, are also employed as protection layers in waterproofing applications. The fabrics have a netlike structure, and thus are not continuous sheets. Fabrics are not preferred because they do not provide adequate impact protection.

Corrugated plastic boards made of extruded polypropylene or high density polyethylene have been used as protection boards in waterproofing. Boards made by World-Pak Corporation of Livingston, New Jersey, comprise two thin film sheets supported a distance from each other by ribs which define uniformly spaced-apart channels. These boards have a structure similar to corrugated cardboard, while others contain rectangular channels running (longitudinally) in the machine direction. These boards may be folded, but in most cases can not be rolled and are extremely difficult to cut so as to fit into detail areas.

In view of the disadvantages of the materials discussed above, a novel impact protection structure and waterproofing method are needed.

## Summary of the Invention

In surmounting disadvantages of the foregoing prior art, the present invention discloses the use of non-friable extruded thermoplastic synthetic polymer sheets comprising two major opposing faces, and, extruded integrally between the faces, at least one continuous polymer matrix. By continuous, it is meant that the sheet is non-corrugated in that it does not have regularly spaced channels or cavities. Rather, the protective sheets comprise a continuous matrix of foamed or unfoamed polymer material in the "z" direction perpendicular to the opposing faces of the sheet, in the "x" direction along the length of the sheet (ie., machine direction of extrusion), and in the "y" direction across the width of the sheet (ie., cross direction perpendicular to extrusion).

The sheets provide impact protection for waterproofing agents, such as flexible pre-formed waterproofing membrane laminates. In vertical installations, such as at-grade or sub-grade concrete foundation walls, the protective sheets are useful for protecting against the impact of stones, rocks, and other objects in soil that is backfilled against the membrane. In horizontal installations, such as on a concrete deck, the protective sheets provide protection from foot and vehicular traffic on site, reinforcement bar installation, dropped tools and equipment, and other abuse.

In contrast to polystyrene boards hitherto used in the industry, the protective thermoplastic extruded sheets of the invention are non-friable in that they can not be easily crumbled or ruptured by rough handling. An exemplary extruded thermoplastic sheet preferably should have a thickness of at least 20 mils. It should also preferably have an elongation at break of at least 10% when tested in accordance with ASTM D-412 (1987) to be considered "non-friable" within the scope of the present invention.

An exemplary method of the present invention for waterproofing and protecting a waterproofed surface comprises the steps of providing a substrate surface, such as a sub-grade vertical concrete wall; applying to the surface a waterproof and waterproofing agent operative to minimize water penetration into the surface; and applying subsequently to the waterproofed surface a sheet comprising an extruded non-friable thermoplastic synthetic polymer material. In preferred methods, the waterproofing agent comprises a carrier support sheet and pre-formed pressure-sensitive rubber bitumen composition layer contiguous therewith.

Convenience of installation as well as installation speed is provided by the novel protective sheets of the invention due to their low bulk density, toughness, and flexibility. The extruded thermoplastic sheets can be installed more rapidly because they can be made generally thinner than extruded polystyrene foam boards, such that an increased number of protective sheets can be manually carried and handled at the job site. Single sheet thickness and optional rollability also facilitate installation. The protective sheets can be conveniently transported to, and handled on, the construction site. If desired, they can be unrolled directly against the building surface.

A further advantage of the protective sheets of the invention is that scrap thermoplastic material can be incorporated into the sheet. Further exemplary sheets contain scrap thermoplastic material which is cross-linked, such as by irradiation, before extrusion. Other exemplary sheets are foamed in the extrusion process. Surprisingly, the inventors have discovered that foamed sheets retain a substantial amount of impact resistance, while also providing reasonable flexibility, when compared to solid sheets in an unfoamed state.

Thus, a further exemplary method comprises the step of foaming the extruded non-friable thermoplastic sheet. The thermoplastic sheet may comprise at least one scrap thermoplastic material which has been cross-linked, preferably through irradiation, before being placed into a melt screw extruder and extruded into sheet form. Thus, a scrap thermoplastic material, preferably made of reclaim scrap and optionally cross-linked, is foamed during the extrusion process.

The present invention is further directed to protective sheets made by the foregoing methods, as well as to structures wherein a waterproofing agent layer is contiguously connected to the protective sheets.

## Brief Description Of The Drawings

Fig. 1 is a partial cross-sectional representation of an exemplary method of the invention for protecting a waterproofing membrane against impact;

Fig. 2 is a diagram of an exemplary method of the invention for making an extruded non-friable thermoplastic synthetic polymer sheet, which can comprise scrap polymer material, substantially cross-linked material, and/or which can be foamed (e.g., reactively extruded);

Fig. 3 is a diagram of another exemplary method of the invention for making an exempalry extruded non-friable thermoplastic synthetic polymer sheet, which can comprise scrap polymer material, substantially cross-linked material, and/or which can be foamed (e.g., reactively extruded); and

Fig. 4 is a partial two-dimensional representation of an exemplary foamed extruded non-friable thermoplastic synthetic polymer sheet of the present invention having substantially cross-linked polymer or "gel" portions.

## Detailed Description of the Invention

### A. Definitions

As used herein, the following abbreviations and terms will have the meanings defined below:

"Polymer," "polymeric," and the like, unless specifically defined or otherwise limited, generally includes homopolymers, copolymers, and terpolymers and blends and modifications thereof.

"Sheet material" or "Sheet" as used herein designates a web that is extruded from a die slot, e.g. a rectangular die slot, in sheet form, or a tubular foam film extruded through a round die which after extrusion is slit into sheet form. When referring to "thickness" of sheets or sheet materials herein, the term "thickness" shall mean and include average transverse thickness.

"Hygroscopic" indicates the tendency of the specified material to absorb water, such as, for example, moist or humid air.

EVA: designates ethylene vinyl acetate copolymers.

EBA: designates ethylene butyl acrylate copolymers.

EAA: designates ethylene acrylic acid copolymers.

PVDC: designates polyvinylidene chloride copolymers and terpolymers. These include vinylidene chloride/vinyl chloride copolymers (VDC/VC), copolymers of vinylidene chloride and acrylate esters such as methlacrylate (VDC/MA) and methylmethacrylate (VDC/MMA), and vinylidene chloride/acrylonitrile copolymers.

Ethylene alpha-olefin copolymer: generally refers to a copolymer of ethylene with one or more comonomers selected from $C_3$ to about $C_{10}$ alpha olefins. These include: heterogeneous materials such as linear low density polyethylene (LLDPE), very low density polyethylene (VLDPE), and ultra low density polyethylene (ULDPE); and homogeneous copolymers such as metallocene catalyzed polymers such as EXACT™ materials supplied by EXXON and TAFMER™ by Mitsui Petrochemical Corporation. These materials generally include copolymers of ethylene with one or more comonomers selected from $C_4$ to $C_{10}$ alpha-olefins such as butene-1 (i.e., 1-butene), hexene-1, octene-1, etc., in which the molecules of the copolymers comprise long chains with relatively few side chain branches or cross-linked structures. This molecular structure is to be contrasted with conventional low or medium density polyethylenes which are more highly branched than their respective counterparts. LLDPE as used herein has a density preferably in the range of from about 0.91 g/cc to about 0.94 g/cc. Other ethylene/alpha-olefin copolymers, such as the long chain branched homogeneous ethylene/alpha-olefin copolymers available from the Dow Chemical Company, known as AFFINITY™ or ENGAGE™ resins, are also included as another type of ethylene alpha-olefin copolymer useful in the present invention.

HDPE: high density polyethylene

LDPE: low density polyethylene

EVOH: ethylene vinyl alcohol

PP: polypropylene

Tie: designates a layer that is provided as an adhesive layer to join two adjacent layers within a multi-layer film or laminate.

Other definitions will be set forth and explained within the context of the following detailed description.

### B. Detailed Description of Exemplary Embodiments

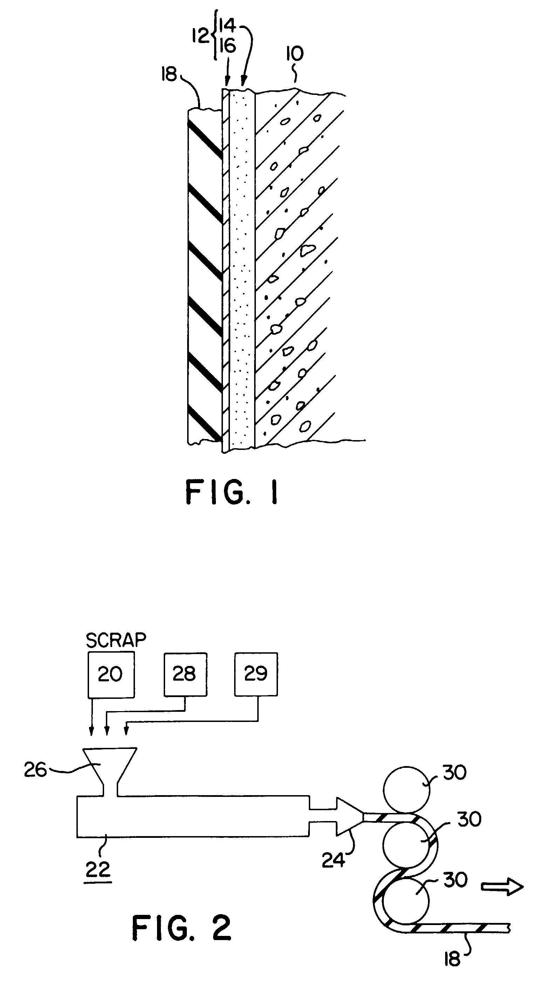

Fig. 1 illustrates an exemplary method of the invention for providing waterproofing and impact protection upon a substrate surface 10. The method comprises the step of adhering to the surface 10 a waterproofing agent 12, preferably a flexible preformed laminate having a pre-formed waterproofing composition membrane layer 14 operative to self-adhere to the surface 10 and a carrier support sheet 16 contiguous with the waterproofing membrane layer 14; and subsequently placing, against the waterproofing agent 12, a continuous sheet 18 comprising an extruded non-friable thermoplastic synthetic polymer material. Soil is backfilled against the outer face of the extruded non-friable thermoplastic sheet 18.

The waterproofing agent 12 includes compositions, articles, or materials which can be applied to substrate surfaces 10 such as at-grade or sub-grade vertical concrete walls, horizontal concrete decks, tunnels, and other building or civil engineering structure surfaces. The waterproofing agent can be liquid-applied coating compositions that are applied on-site. Such compositions typically comprise coal tar-modified or asphalt-modified urethanes, epoxies, polysulfides, or emulsions of asphalt mixed with rubber. The waterproofing agent 12, as mentioned above, preferably comprises a sheet-like pre-formed waterproofing membrane laminate 14/16, as shown in Fig. 1. The term "waterproofing" is intended to refer to compositions which minimize water penetration into the building surface 10. Preferably, the waterproofing composition is itself "waterproof" in that it does not dissolve in water.

Preferred waterproofing membrane laminates 12 may be constructed in a known manner, such as disclosed by U.S. Patents No. 3,741,856, No. 3,853,682, and No. 3,900,102 of Hurst. The waterproofing composition 14 is preferably rubberized asphalt. The waterproofing adhesive 14 may be applied as a hot-melt, latex, solvent-based coating, or cold (100%) solids coating to the substrate surface 10, but more preferably it is applied as a preformed and pressure-sensitive adhesive layer having a uniform transverse thickness. The term "preformed" as used herein refers to waterproofing sealant material that is shaped as a sheet layer. The layer 14 is made preferably by coating a rubber bitumen layer (optionally containing a process oil) in a uniform thickness upon a release paper (which is later removed at the installation site).

The waterproofing agent or membrane should preferably be such that it will stick to the required surface without the use of heat. Preferably, the surface 10 is pretreated with a known binding agent such as a water-based or solvent-based primer composition, before attachment or coating of the waterproofing agent 12. In preferred waterproofing membrane laminates, the pre-formed waterproofing composition layer 14 is formed of natural or synthetic rubber, virgin or reclaimed, blended into bitumen and process oil to provide a smooth mix. The carrier support sheet 16 can comprise films, or woven or nonwoven material, and is preferably a continuous film sheet comprising a natural rubber, a synthetic organic polymer such as polyethylene, polypropylene, a polyamide, a polyester such as polyethylene terephthalate, a polyurethane, polyvinyl chloride, a copolymer of vinyl chloride and vinylidene chloride, a metal, or a combination of the foregoing. More preferably, the carrier sheet 16 comprises cross-laminated high density polyethylene. A suitable waterproofing membrane laminate 12 having both a preformed waterproofing membrane composition 14 and carrier support film sheet 14 is available from W.R. Grace & Co.-Conn., Cambridge, Massachusetts, under the tradename BITUTHENE®. Suitable primer compositions are also available from Grace.

Further exemplary embodiments of the invention comprise a laminate wherein the protective sheet 18 is itself used as the carrier support sheet that is attached to a preformed waterproofing composition layer 14. This embodiment can be directly applied or unrolled onto the substrate surface 10.

However, in preferred methods, the protective polymer sheet 18 is placed against the waterproofing agent 12 or laminate 14/16 which has been installed first upon, and adhered to, the surface 10. An exemplary thermoplastic polymer sheet 18 preferably comprises a polyolefin such as polyethylene or polypropylene. The sheet 18 may, in further exemplary embodiments, comprise a mixture of synthetic polymer materials within the same layer. Thus, for example, in addition to having a polyolefin, the sheet 18 may further comprise an additional synthetic polymer material such as a polyamide, a polyester, a polyethylene terephthalate, a polyurethane, a polyvinyl chloride, a polyvinylidene chloride, or any combination of the foregoing. The inventors have discovered that if the sheet 18 contains a polyamide (e.g., a nylon), then the sheet 18 should preferably contain by total weight less than 40%, and more preferably less than 15%, of polyamide, which increases the susceptibility of the extruded sheet to tearing.

An exemplary impact-protected, waterproofed building surface of the invention comprises a waterpenetrable surface 10, a waterproofing membrane layer 14 attached to said surface 10 and operative to minimize penetration by water into said surface 10, and a continuous non-corrugated sheet 18 comprising an extruded non-friable thermoplastic synthetic polymer material having opposing major faces integrally connected by a continuous unfoamed or foamed polymer matrix at least 20 mils in thickness between the opposing major faces.

The term "non-friable" as used herein means and refers to the resistance of the sheet 18 to tearing or crumbling, such as by hand. This contrasts with prior art polystyrene boards which crumble easily when subjected to rough handling. The difference between polystyrene protection boards and extruded thermoplastic protective sheets 18 of the present invention can be manifested by qualitative in-hand testing, and can be discerned quantitatively. As will be shown hereinafter, the non-friable nature of the sheets 18 can be described in terms of percent elongation at break, when samples are tested in accordance with ASTM D-412-87. Under this test, "non-friable" thermoplastic sheets 18 of the invention should possess at least 10% elongation at break (ASTM D-412-87), more preferably at least 15% elongation at break, and most preferably at least 20% elongation at break.

Preferably, the sheet 18 is "continuous" in that when placed against the waterproofing agent 12 it contains no gaps, holes or discontinuities such as would be presented by fabrics such as non-wovens and felts that would permit stones or rocks that may be contained in backfilled soil from puncturing the agent 12. The transverse thickness of the sheet (in the "Z" direction perpendicular to the opposing major faces of the sheet) should preferably be 20 - 200 mils. More preferably, it has a thickness of 20-120 mils for vertical installations, and 75-200 mils for horizontal installations. Most preferably, it has a thickness of 30-60 mils for vertical installations, and 90-150 mils for horizontal applications. In such thicknesses, the non-friable thermoplastic sheets of the present invention are rollable and provide adequate impact protection in comparison with prior art protection board materials. The ability to employ reduced thicknesses in the protection sheet 18 facilitates the ability to overlap adjacent sheets 18. This is a distinct advantage when compared to thick polystyrene boards.

The sheet 18 is preferably "noncorrugated" in that, whether foamed or solid (unfoamed), the sheet does not contain uniformly spaced apart channels, but rather contains a "continuous" polymer matrix (e.g., foamed or solid) between the opposing outer major faces of the sheet, which may have smooth, roughened, textured, or variegated surfaces. Exemplary sheets of the invention therefore preferably contain a continuous polymer material or materials in the "Z" direction, perpendicular to the opposing major faces of the sheet 18; in the "X" direction, that is, in the machine direction (the same in which the sheet is extruded); and in the "Y" direction, that is, in the cross direction (perpendicular to that in which the sheet is extruded).

In other exemplary methods, the protective sheet 18 comprises scrap thermoplastic polymer. Preferably, the sheet 18 comprises scrap "reclaim," which means and refers to materials obtained as wastage and/or trim during the manufacture of thermoplastic films. Such waste can be compressed and/or comminuted to form pellets, flakes, powder, or chunks, and thereafter introduced into an extruder, such as a melt screw extruder. The sheet 18 may comprise "recycled" scrap, by which is meant post-consumer articles, such as plastic milk bottles or water bottle containers made of high density polyethylene (HDPE).

One notable benefit of employing scrap polymers is that the sheet 18 can be extruded with an irregular or roughened (i.e. three-dimensional) surface on at least one major face. This feature is particularly noticeable when the scrap is foamed. An irregular (i.e., non-flat) surface can impart the aesthetic impression of toughness.

In further exemplary embodiments, reclaim or recycled polymeric materials include polymeric materials optionally having a hygroscopic polymeric component. These include mono- or multi-layer films having one or more layers containing EVOH, nylon, or the like. Further exemplary methods and sheets of the invention can advantageously incorporate reclaim or recycled materials comprising at least 10 percent by weight of hygroscopic polymeric material or more. Surprisingly, polymeric hygroscopic scrap can be reprocessed by foam extrusion without blending in additional non-hygroscopic-containing polymeric material. Therefore, the invention includes recycled and/or reclaim material that consists essentially of polymeric material comprising a hygroscopic component, but which may include addenda and additives such as those further described below.

Fig. 2 is a diagram of an exemplary method for extruding protective sheets 18 of the invention. A thermoplastic material 20, which can comprise virgin resin and/or scrap thermoplastic synthetic polymer material, is introduced into a melt screw extruder 22, extruded through a sheet die 24, and optionally advanced from the sheet die using one or more rollers 30 (here shown in stacked configuration). For example, scrap thermoplastic material 20 may be introduced into the extruder 22 in pelletized, chunk, or flaked form. The scrap particles can be made by grinding reclaim or recycled waste materials and/or fusing them to form discrete particles which can be fed into the extruder 22 through a hopper 26 or crammer feeder. The scrap may be fed, for example, directly on-line from a grinder, or mechanically conveyed into the extruder hopper. If desired, the scrap can be mixed or blended into the hopper or extruder with a virgin or non-recycled polymeric material.

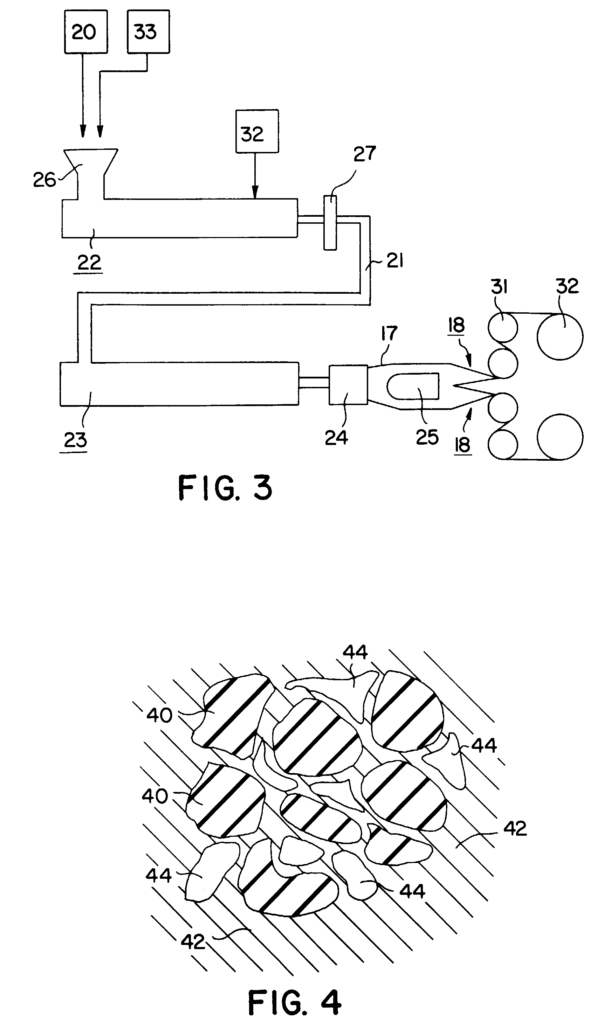

The extruder may comprise either a single stage extruder or a multistage extruder (Fig. 2) or tandem screw extruders (Fig. 3). A foaming (also termed "blowing") agent such as carbon dioxide is introduced into the extruder, preferably injected into the melt near the end of the extruder 22. In the case of a foaming agent that is not a volatile at the pressure and temperature conditions in the extruder, the selection of foaming agent should be such that it can decompose at or below the temperature at which extrusion will be carried out for the particular recycled polymeric scrap material in order to evolve the gas. Examples of foaming agents that decompose at specific temperatures to liberate gases may be found in U.S. Patent No. 4,181,780 issued January 1, 1980, to Brenner et al., incorporated by reference herein. Foaming agents useful in the present invention are also described in Handbook of Polymeric Foams and Foam Technology, Chapter 17, "Blowing Agents for Polymer Foams," by F.A. Shutov (1991). The amount of chemical foaming agent employed is typically in the range of about 0.25 to about 5 parts per hundred by weight based on the weight of the extruded material.

Useful foaming agents also include physical foaming agents, which are well known in the art. Examples of these include butane, pentane, hexane, heptane, carbon dioxide, dichlorodifluoromethane, nitrogen and the like.

It may be desirable to introduce a nucleating agent into the extruder. The nucleating agent, which functions to provide sites for bubble formation, can be introduced or metered into the same feed stream as the polymeric material or scrap or separately through a port intake downstream of the hopper. The nucleating agent helps produce a foam having small and uniform cells. Typical nucleating agents are citric acid, sodium bicarbonate, magnesium oxide, talc, and calcium carbonate.

Various other additives can be introduced into the extruder or into the materials fed to the extruder. The additives can include fillers or pigments such as carbon black, lubricants, and virgin thermoplastics as discussed above, process oils, and mixtures thereof. These or other additives can be employed to improve the physical properties, the appearance, the chemical properties, or the processability of the composition for foaming.

Certain additives or stabilizers may be desirable when recycling PVC or PVDC-containing materials, or any materials that upon degradation can evolve potentially harmful byproducts such as HCl gas. For example, when recycling or reclaiming PVC or PVDC, a neutralizing compound such as metal carbonate or bicarbonate can be added to the scrap or the melt to neutralize HCl. The evolved acid byproducts can also be reacted with an additive such as a foaming agent to evolve acceptable foaming gases as a reaction product. This can decrease or eliminate the necessity of adding an additional mineral acid component such as a metal carbonate or bicarbonate during foam extrusion.

A preferred method comprises foaming the thermoplastic sheet 18 as it exits a die 24. As shown in Fig. 3, thermoplastic material 22 such as a thermoplastic scrap which is pelletized, crumbled, chunked, and/or flaked, is introduced into a primary melt screw extruder 22. A blowing agent such as carbon dioxide gas 32 and a talc nucleating agent 33, for example, are introduced into the extruder 22. Other nucleating agents may comprise citric acid, sodium bicarbonate, and magnesium oxide. The nucleating agent 33 can be introduced or metered into the same feed stream as the thermoplastic material 20 or separately through a separate port intake located downstream of the hopper 26. The function of the primary extruder 22 is to melt the thermoplastic material such as scrap particles 20 into a molten mass, to mix the nucleating agent 33 (or any other additives) into the molten mass such that it is dispersed uniformly therein, and to increase the bulk density of the thermoplastic material melt mix and to drive substantially all of the air content out of the melt mix. The extruders of the kind shown at 22 are well-known in the extrusion arts, and typically comprise (in sequential order) a feed zone for intake of material near the beginning of the screw, a melt zone which melts, mixes, and compresses the molten material, and a metering zone to provide a uniform flow. Additional materials can be introduced at this point.

At the end of the primary extruder 22, a blowing agent such as carbon dioxide can be injected into the metering zone. Alternatively, the blowing agent can be an inert gas (e.g., argon), freon, or hydrocarbon. The melt is transferred by means of a transfer tube 21 into a secondary extruder 23 in which the molten thermoplastic mix is allowed to cool before it reaches the die 24. As will be known to those skilled in the extrusion arts, the cooling profile of the secondary extruder 23 can be set to optimize the line speed while maintaining temperature and melt viscosity required for foaming the thermoplastic mix. Foaming occurs at the die lips 24 due to a drop in pressure. The tandem extruder equipment diagrammed in Fig. 3 is known to those skilled in the extrusion arts. It would be further within the realm of knowledge without undue experimentation to achieve the appropriate temperature, pressure, and compression conditions in the primary extruder 22, to cause the blowing agent to be uniformly dispersed within the molten thermoplastic mix as well as in the secondary extruder 23, and to permit the thermoplastic mixture to be foamed by the blowing agent upon exiting the die 24; however, the screen is not preferred for processing cross-linked materials because clogging may arise. A screen changer 27 may be placed in the connecting pipe 21 between extruders 22 and 23 to remove foreign particles that can potentially clog the die 24. However, the screen is not preferred for processing cross-linked materials because clogging may arise.

As shown in the exemplary method of Fig. 3, an annular die 24 is used to extrude the thermoplastic material into a tube shape 17. The tube is stretched over a forming mandrel 25. The sheet is then slit at the bottom of the forming mandrel to yield a sheet 18 form. The stretching also imparts some biaxial orientation to the sheet, which is then wound by takeoff rolls 31 and wind-up rolls 32.

In further exemplary methods, the thermoplastic material 20 includes but is not limited to ethylene/alpha-olefins such as LDPE, LLDPE, VLDPE, ULDPE, HDPE, polypropylene and EPC, PET and PE, polyamides, PVC, PVDC, EVOH, ethylene vinyl esters such as EVA, ethylene acrylate esters such as EBA, or a combination of the foregoing. In addition to PVC and PVDC, other exemplary thermoplastic materials include and are not limited to halogenated polymers.

Preferably, the thermoplastic material 20 is reclaim scrap, and most preferably includes at least one cross-linked thermoplastic polymer. Representative examples of recyclable polymeric scrap may be obtained from post-use consumer polymeric articles such as plastic milk bottles, HDPE water bottles, PET bottles, and articles such as tires containing other types of crosslinked polymeric materials, to name but a few. Any of these combinations of materials can be extruded into the sheets 18 of the invention.

Another exemplary embodiment of the invention includes extruding a thermoplastic polymer mixture comprising at least one cross-linked scrap thermoplastic material component. For example, film packaging material, such as designed for packaging meat and poultry, is often highly cross-linked by irradiation. The wastage and trim scrap ("reclaim") from such film material is sometimes reincorporated into the film by coextruding the scrap material between two or more layers; but otherwise the use for such cross-linked scrap is limited. Such scrap usually ends up in landfill, and is otherwise an expensive discard material due to transportation and other disposal costs.

Surprisingly, it is discovered that introducing into a melt screw extruder chunks or pellets of such cross-linked scrap can produce an extruded sheet product useful in waterproofing and impact protection. Irradiated scrap thermoplastic polymers can constitute the cross-linked or "gel" component of the sheet. An exemplary method thus involves extruding thermoplastic polymer that is cross-linked, e.g., irradiated before being put into the extruder 22.

Reclaim scrap thermoplastic material may comprise the previously identified thermoplastic materials. Cross-linked material is typically difficult to extrude because of viscosity due to the gel component. However, material which is not substantially cross-linked has a lower viscosity, and therefore can be used to assist or improve extrusion of cross-linked material. In conventional melt screw extruders (e.g., Fig. 2) at temperatures at or above 350°F, for example, a cross-linked thermoplastic polymer such as polyethylene will most likely be a gel that is deformable but not freely flowable. Thus, an amount of uncross-linked polymer can be added to reduce viscosity. It is believed that cross-linked and non-cross-linked polymer do not form, upon extrusion, a homogenous single-phase system. Instead, it is believed that cross-linked thermoplastic polymer forms gel phases, or "domains," within the non-cross-linked or substantially non-cross-linked polymer melt and solid phase.

Accordingly, another exemplary embodiment comprises a thermoplastic sheet having domains of cross-linked thermoplastic scrap polymer distributed within non-cross-linked thermoplastic polymer. For purposes of definition herein, the term "thermoplastic" means and refers to the kinds of polymers and copolymers previously identified above (including but limited to LDPE, LLDPE, HDPE, PP, EVA, PVC, PVDC, EVOH, polyamides, polyesters etc.) . The presence of cross-linking does not exclude a thermoplastic polymer from being deemed a "thermoplastic" polymer as claimed herein.

A known approach for determining the degree of cross-linking in a polymer is solvent extraction. This can be viewed as a way of ascertaining the "gel content," or, in other words, the percentage by mass of polymer insoluble (i.e. not loosened or dissolved) in a specified solvent after extraction. The gel content (insoluble fraction) produced, for example, in ethylene plastics by cross-linking can be determined by extracting with solvents such as decahydronaphthalene or xylene. Such a test is described in ASTM D 2765 - 90, incorporated herein by reference. This test is applicable to cross-linked ethylene based polymers and co-polymers of all densities. Specimens of the cross-linked ethylene plastic are weighed, immersed in the extracting solvent at a specified temperature and for a specified time. After extraction, the specimens are removed, dried, and reweighed. The amount of material extracted is calculated, and this is compared to the weight of the initial weight of the test specimen. Thus, the percentage weight which is extractable indicates that portion or percentage of the sample which was not cross-linked. Thus, the percentage weight which is non extractable (e.g., 30%) indicates that portion of the sample which was cross-linked. Therefore, a polymer which is 10% to 90% non-extractable will be "cross-linked" for purposes herein. The solvent used for the test must be one which dissolves the non-cross-linked polymers.

Thus, in further exemplary embodiments, the extruded thermoplastic sheet 18 comprises scrap, preferably reclaim scrap, comprising at least 10% gel content. Scrap thermoplastic polymer material having at least 30% gel content is referred to herein as "highly cross-linked" polymer. Thus, further exemplary scrap thermoplastic polymer sheets 18 comprise at least 30 percent gel content. In still further embodiments, the sheet 18 comprises at least 40 percent gel content.

Further exemplary protective sheets 18 of the invention comprise a mixture of at least two polymers. For example, the sheet may comprise a mixed nylon and polyolefin scrap. Either or both or none of the nylon or polyolefin may be cross-linked. Thus, at least two scrap plastic materials can be combined into the same sheet 18. Another exemplary sheet 18 may comprise reclaim scrap arising from the manufacture of films having a mixture of LDPE or LLDPE and polyamide (nylon), such as multi-layer films manufactured for food packaging. Pellets, chunks, or particles that each contain this mixture of polymers can be fed into a melt screw extruder and pushed through a die to produce sheets 18.

In further exemplary methods, additives may be incorporated into the melt extruder (such as generally indicated at 28 and 29) to be mixed into the extruded thermoplastic material. Such additives can include fillers, plasticizers, pigments, lubricants, processing aids, carbon black, titanium dioxide, and UV absorbers.

The invention also includes foaming the sheet 18 in a "reactive extrusion" process. This involves introducing into a melt screw extruder 22 (e.g., Fig. 2) a scrap thermoplastic polymer 20, and an organic acid 28 and mineral base 29 which are operative when intermixed to produce a gas; and extruding the melted mixture 20/28/29 through a die 24 whereby the gaseous by-product of the neutralization reaction between the acid and base components foams the thermoplastic polymer during extrusion.

Further exemplary methods involve introducing a scrap thermoplastic polymer, such as reclaim LLDPE, into the extruder 22 with an acid polymer 28 (e.g., ethylene acrylic acid) and a base material 29 (e.g., a mineral carbonate or bicarbonate such as sodium bicarbonate). In the die 24, vapors generated by the neutralization reaction foam the mixture while it is extruded 18. As shown in Fig. 2, optional rolls 30 should, in the case of the reactive extrusion process, be stacked and chilled to quench the extrudate and minimize breakage of the foam bubbles in the sheet 18 material. Combinations of materials for the acid component 28 and base component 29 are known and believed to be suitable for use herein. (See e.g., U.S. Patents 3,264,272 and 3,355,319 of Rees et al., incorporated herein by reference). Suitable acid components for the neutralization reaction include but are not limited to ethylene acrylic acid (e.g., PRIMACOR™ from Dow) and methacrylic acid (e.g., NUCREL™ from Du Pont).

A neutralization reaction takes place between an organic acid, such as an acid copolymer, with a mineral base, such as sodium bicarbonate, in an extruder under pressure. The reaction is as follows:

$$R\text{-}COOH + NaHCO_3 \rightarrow R\text{-}COO^{(-)} Na^{(+)} + CO_{2\uparrow} + H_2O\uparrow$$

Thus, reaction of certain metal salts with an acid copolymer can produce a reaction product that chemically incorporates a metal ion into the resin, otherwise referred to generically as an "ionomer." Suitable stoichiometric combinations will depend upon the acid and base components and other processing variables, such as processing conditions desired and equipment used, all of which are believed to be known within the ordinary skill of those in the art.

The above reaction results in the generation of carbon dioxide in the product mix. Upon extrusion and the accompanying pressure drop, the carbon dioxide evolves as a gas and therefore acts as a foaming agent. In this manner, the reactive extrusion process provides both a "binding" and foaming effect by trapping gas to produce the foamed sheet product 14. The resulting ionomer from the neutralization step wets and binds the scrap together while gases evolve to fill the voids as a foam.

When reclaiming PVC or PVDC-type materials, or any materials that upon degradation can evolve potentially harmful byproducts such as HCl gas, it may be desirable to add an appropriate stabilizer. For example, with PVC and PVDC materials, a neutralizing compound such as a metal carbonate or bicarbonate can be added to the material being reprocessed to neutralize any HCl evolved. In the reactive extrusion process above described, the evolved acid degradation byproducts can directly react with the foaming agent to evolve foaming gases as a reaction product. This can decrease or eliminate the necessity of adding a separate mineral acid component such as the metal carbonate or bicarbonate described above when reclaiming PVDC materials.

Fig. 4 is a partial two-dimensional representation of an exemplary foamed sheet 18 comprising cross-linked scrap thermoplastic synthetic polymer material that is foamed. Without being limited to theory, the inventors believe that in cases wherein substantially cross-linked and uncross-linked materials are co-extruded, the extrudate has a gel phase distributed within uncross-linked and substantially uncross-linked material. The gel phases can be described as domains 40 of cross-linked scrap thermoplastic material, such as a reclaim polyolefin (e.g., irradiated polyethylene), distributed within and bonded together by a molten uncross-linked thermoplastic polymer component 42 (e.g., virgin resin or uncross-linked reclaim scrap) introduced into the melt screw extruder. The foam is created by pockets 44 containing $CO_2$ or other gas.

Other exemplary methods of the invention comprise the steps of comminuting (e.g., grinding) reclaim scrap waste obtained from multi-layer thermoplastic film comprising at least two-layers of polymer materials which are different from each other (e.g., a polyethylene and a polyamide and/or an ethylene vinyl acetate); and introducing said comminuted thermoplastic reclaim into a melt screw extruder. The polymer materials can also be cross-linked, such as by irradiation.

The present invention is also directed to the non-friable extruded thermoplastic synthetic polymer sheets 18 made by the various extrusion methods described above. Further exemplary protective sheets 18 comprise pre-applied strips or patches of pressure-adhesive for attaching the sheets 18 to the waterproof membrane laminate 12 or waterproofed surface 10. For example, two-sided tape and known mechanical devices can be used. Pressure-sensitive adhesive can be applied onto the sheet as a hot-melt or in the form of two-sided tape. The adhesive can be protected by the use of a release sheet, such as wax or siliconized paper, which protects the adhesive and can be removed prior to adhering the sheet 18 to the waterproofing agent 12 or waterproofing laminate.

Further exemplary scrap protection sheets 18 comprise a pressure-sensitive adhesive located on one side of the sheet, and a release agent located on the opposite side of the sheet, such that the sheet can be rolled onto itself, whereby the adhesive is releasably adhered to the release agent located on the opposite side of the sheet roll. Alternatively, sheets can be stacked together such that the pressure-sensitive adhesive on one sheet is releasably adhered to the release agent on the back of an adjacent stacked sheet. The shape of the pressure-sensitive adhesive can include continuous strips or discontinuous patches. The adhesive can also be applied as dots, squiggles, or in random fashion.

Preferably, the protective sheets 18 for vertical applications have a thickness of at least 20 mils. More preferably, the thickness is at least 40 mils, and most preferably the thickness is 50-60 mils. Preferred protective sheets further have an elongation at break of at least 10%, more preferably of at least 15%, and most preferably of at least 20% in accordance with ASTM Standard Test Method D-412-87. Preferred protective sheets further have an impact energy of at least 50 lbs-ft$^2$/sec$^2$ and, more preferably, at least 55 lbs-ft$^2$/sec$^2$, and most preferably at least 60 lbs-ft$^2$/sec$^2$ in accordance with ASTM G-14 modified as described in Example 8 hereinafter.

## EXAMPLES

In the following examples, the gel content where provided is determined in accordance with ASTM Standard Test Method D-2765-90, wherein a weighed sample is extracted in toluene by boiling the contents for twenty-one hours. The non-soluble species which comprises the gel component is separated and weighed, to provide the percent content by weight of gel of the original weighed sample.

### Example 1

Foam extrusion tests were carried out on a number of individual virgin resins: LDPE, HDPE, LLDPE, EVA, and nylon. For each test the resin was combined in the extruder feed with 3 percent by weight Primacor™ 5981, which is an EAA copolymer, and 2 percent by weight sodium bicarbonate. Each extrusion was run with a Brabender 3/4 inch extruder fitted with a two-inch-wide rectangular die slot. In each test, a 60 mil thick foam polymeric sheet material was successfully formed.

## Example 2

A monolayer foam sheet material was prepared as in Example 1 but using pelletized scrap resin materials as the extruder feed.

(i): A roll of scrap film comprising, in sequential layered arrangement, 1.6 mils polypropylene, 0.4 mils tie layer, 1.04 mils nylon, 0.8 mils EVOH, 1.04 mils nylon, 0.64 mils tie layer, and 2.48 mils LLDPE (with the nylon plus EVOH components comprising a total of 36 percent by weight of the film) was pelletized to form a first pelletized material. The pellets were introduced into a Brabender 3/4 inch extruder fitted with a two-inch-wide rectangular die slot, and successfully foamed into a foam sheet.

(ii): Another roll of heat shrinkable film comprising, in sequential layered arrangement, 0.1 mils EVA, 0.15 mils LLDPE, 0.1 mils EVA, 0.15 mils LLDPE, and 0.1 mils EVA was cross-linked by electron beam irradiation to a level of 35% gel content by weight and pelletized as in Example1 to form a second pelletized material. The pellets were also successfully foam extruded using the Brabender extruder and slot die into a sheet.

## Example 3

A 20 mil thick two-ply tubular film was formed by coextruding two layers, each layer comprising a blend of EVA and LLDPE, through a circular die. The tubular film was flattened into a tape, which was irradiated by electron beam and thereby cross-linked to a gel content of 45 percent by weight. The film was then extrusion coated with a nonirradiated EVA blend layer to form a 28 mil thick three-ply film having a net gel content of 25 percent by weight. The film was oriented by biaxially stretching to form a shrink film 2.35 mils thick. The tubular film was pelletized and foam extruded as in Example 2 to form a foam sheet.

## Example 4

A tubular film was produced as in Example 3, except that an additional PVDC copolymer layer was added between the irradiated tape and the additional EVA/LLDPE blend layers. The film was pelletized, and foam extruded as in Example 2 except with 5 percent by weight of sodium bicarbonate. A foam sheet material was successfully formed.

## Example 5

A scrap composition having the following composition by weight was pelletized and blended:

**(i)** 60 percent of a three-ply film of Example 3;
**(ii)** 20 percent of the first pelletized material of Example 2 (i); and
**(iii)** 20 percent of the second pelletized material of Example 2 (ii).

The net weight percent of gel content in the blend was 22% (15% attributable to (i) and 7% attributable to (iii)). The blend was fed to a tandem extruder at a rate of 172.5 lbs./hr. Once melting and mixing had commenced in the first stage extruder, 2.5 lbs./hr of carbon dioxide under high pressure was injected into the melt. The resultant blend was fed under pressure to the second stage extruder for further mixing and then extruded through a circular die to form a foam sheet material having a thickness of 50 mils and a density of 0.53 g/cc. The test was repeated except that 3.2 lb./hr. of carbon dioxide was injected. A foam sheet was formed having a thickness (average) of 100 mils and a density of 0.61g/cc.

## Example 6

The 50 mil sheet material of Example 5 was tested for friability and other mechanical properties. Comparison tests were run on a 250 mil thick polystyrene foam material, with and without outer polyester skin layers. The test for friability consisted of a tensile and elongation test carried out according to ASTM Standard Test Method D-412-87 using an Instron Model 1000 Tensile Tester. As specified in ASTM D-412-87, a specimen was clamped between two grip elements of the Instron testing machine. The machine was then activated to exert an increasing force on the sample. As the sample was stretched (at the rate of 0.5 inches per minute), the change in length measured and the total change in length at break noted. The load at break (e.g., total force) was also noted. The tensile strength was computed by dividing the load at break "F" (lbs.) by the original cross section area "A" (sq. inches). Thus, Tensile Strength (TS) = F (lbs.)/A (sq. inches). The percentage elongation at break was calculated as follows:

% Elongation = 100 x change in length/original length

It was found that the controls (prior art 250 mil polystyrene foam boards) had essentially no elongation at break and were thus extremely friable.

The tear propagation Strength Test involved a determination of the resistance of a protective board or sheet to tearing forces. Two 3" x 9" strips of the control polystyrene foam board (with and without skin layers) were compared to a 3" x 9" strip of 50 mil sheet material of Example 5. A two-inch (2") longitudinal incision is made in the middle of one of the three-inch ends of the strips. The thickness of the strips are measured, then the strips are clamped in the Instron (Model 1000). The Instron grip elements are located a distance of 1 inch on either side of the incision. The load placed on the strip will depend upon materials and thicknesses. For the present comparative samples, the crosshead speed was about 0.5 in./minute. Once the Instron is activated and a tear of 2 inches is propagated from the incision, the peak load is recorded in terms of lbs. and then converted to Specific Tear Strength (see Column two in Table 1) by dividing the peak load by the thickness of the sample.

The results are shown in the following table:

Table 1

| | Tear Prop. Strength (lb.) | Specific Tear Strength (lb./mil) | Tensile at break (psi) | Elongation at Break (%) |
|---|---|---|---|---|
| 250 mil polystyrene with skin layers | 22.5 | 0.09 | 96 | <1% |
| 250 mil polystyrene without skin layers | 13.0 | 0.05 | 51.5 | <1% |
| 50 mil foam scrap | 28.5 | 0.57 | 720 | 25 |

The data demonstrates that the foam scrap sheet according to the invention is less friable, that is, has higher tear strength properties and substantially stronger tensile properties, and is more extensible than the comparison materials.

### Example 7

A dart impact test is used for determining the impact properties of protection boards and sheets. The test was modified from ASTM G-14.

The testing apparatus consists of a 3" x 4" x 16" mortar block having a compressive strength of about 4,000 - 5,000 psi. for mounting samples thereon, and an electromagnet which holds an impact dart at a height above the sample mounted on the block. The block is placed at a 30 degree angle from horizontal so as to approximate the effect of objects striking a vertically mounted protection board. For testing of horizontally mounted protection boards, the sample is mounted horizontally. The dart has a body of 4 kilograms, as well as interchangeable heads having spherically shaped impact surfaces having different curvatures. One head had a radius of curvature of 1/4 inch, while another head had a radius of curvature of 1/8 inch. The use of different size heads simulates the effect of having different stones or rocks in soil backfilled against the sample in the actual waterproofing environment.

A BITUTHENE® brand waterproofing membrane is adhered onto the upward face of the concrete block. The protective sheeting samples are then attached over the adhered membrane by means of and adhesive strip (e.g., BITUSTIK® brand tape, available from W.R. Grace & Co.-Conn.).

The dart is dropped first from a height which does not cause rupture of the membrane under the protective sheet sample. Successive tests are run at increased heights from which the dart is dropped several times until the waterproofing membrane ruptures half the time (when viewed under a light microscope). At that height, the energy which corresponds to the impact being resisted is calculated by using the formula E = mgh, wherein "m" is the combined mass of the dart head and body (lbs), "g" is the acceleration due to gravity (32 ft/sec$^2$), and "h" is the distance from the dart tip to the mortar block impact point (ft). Thus, units for impact energy E are lb-ft$^2$/sec$^2$.

The impact energy calculated was a weighted average ($E = (.31)E_{1/8} + (.69)E_{1/4}$) of the 2 dart sizes (1/4" and 1/8" radii of curvature) in the ratio 31:69. This was chosen on the assumption that in actual backfill conditions, there was a greater probability of having stones or rocks with edges or points having 1/8" radius of curvature. An average impact energy is evaluated which reflects the actual backfilling situation.

Recycled scrap was prepared from the following materials:

Stream i: polymer material as in Example 5 (iii) (highly crosslinked)
Stream ii: polymer material as in Example 3 (moderately crosslinked)
Stream iii: polymer material as in Example 2 (i) (lightly crosslinked)

The following scrap compositions were pre-blended in the indicated ratios by weight of material streams (i)-(iii) and pelletized as in Example 2:

Sample 1: 60% (i) + 20% (ii) + 20% (iii)
Sample 2: 30% (i) + 30% (ii) + 40% (iii)
Sample 3: 40% (i) + 40% (ii) + 20% (iii)
Sample 4: 50% (i) + 50% (ii)
Sample 5: 100% (i)
Sample 6: 100% (ii)

For each composition, the pelletized material was metered into an extruder hopper by means of a volumetric feeder, introduced into a 1" single screw extruder having a length:diameter ratio of 24 and fitted with a 4" die, and extruded in accordance with the invention. A 3 roll stack and winder comprised the take-off assembly. Composition 1 was successfully extruded into a sheet having an average thickness of 50 mils. Composition 2 was successfully extruded into a sheet having an average thickness of 49.5 mils. Composition 3 was successfully extruded into a sheet having an average thickness of 49 mils. Composition 4 was successfully extruded into a sheet having an average thickness of 38 mils. Composition 5 was successfully extruded into a sheet having an average thickness of 45 mils. Composition 6 was successfully extruded into a sheet having an average thickness of 38 mils. The impact resistance of the extruded polystyrene ("Ex PS") and each of the six samples were obtained as follows:

Table 2

| No. | Formulation | Avg. Thickness (mil) | Drop Height using 1/8" dart | Drop Ht. using 1/4" | Energy lb-ft$^2$/sec$^2$ |
|---|---|---|---|---|---|
| C | Ex PS | 250 | 2.0 | 5.0 | 62 |
| 1. | Sample 1 | 50 | 3.5 | 5.5 | 87 |
| 2. | Sample 2 | 49.5 | 3.5 | 6.0 | 90 |
| 3. | Sample 3 | 49 | 3.0 | 5.0 | 76 |
| 4. | Sample 4 | 38 | 2.0 | 5.0 | 62 |
| 5. | Sample 5 | 45 | 2.5 | 6.0 | 75 |
| 6. | Sample 6 | 38 | 2.0 | 5.0 | 62 |

The sample protection boards (Samples 1-6) demonstrated good impact resistance even though they were 20% or less in thickness compared to the extruded polystyrene board.

**Example 8**

The impact properties of foamed and solid sheets are given in Table 3 below.
The sheets having the following composition were tested. The following scrap compositions were pre-blended in the indicated ratios by weight using Stream 1 and Example 7 and pelletized as in Example 2.

Sample A. 100% Stream 1 (solid sheet)
Sample B. 80% Stream 1, 15.6% EAA, 4.4% sodium bicarbonate
Sample C. 95% Stream 1, 3.9% EAA, 1.1% sodium bicarbonate

Sample A was successfully extruded into a sheet having an average thickness of 60 mils and a density of 0.84 g/cc. Sample B was successfully extruded into a foam sheet having an average thickness of 70 mils and a density of 0.44 g/cc. Sample C was successfully extruded into a foam sheet having an average thickness of 70 mils and a density of 0.51 g/cc.

Table 3:

| Solid vs Foamed Sheet Comparison | | | | | | |
|---|---|---|---|---|---|---|
| No. | Formulation | Thickness (mil) | Drop height (inches) | | Impact Energy lb-ft$^2$/sec$^2$ | Density g/cc |
| | | | 1/8 | 1/4 | | |
| 1. | Sample A* | 60 | 3.0 | 7.0 | 89.73 | 0.84 |
| 2. | Sample B** | 70 | 3.5 | 5.5 | 87.03 | 0.44 |
| 3. | Sample C** | 70 | 3.0 | 7.0 | 89.73 | 0.51 |

*solid sheet

**foamed sheet

As modifications may be evident to those of ordinary skill in view of the disclosures herein, the foregoing exemplary embodiments are provided for illustrative purposes only and are not intended to limit the scope of the invention.


**Claims**

1. A method of waterproofing a substrate surface, comprising the steps of: applying a waterproofing agent to a water-penetrable substrate surface, and subsequently placing against the applied waterproofing agent a continuous sheet comprising an extruded non-friable thermoplastic synthetic polymer, the non-friable sheet comprising opposing major faces integrally connected by continuous polymer material.

2. A method according to claim 1 wherein the waterproofing agent comprises a flexible waterproofing membrane laminate having a preformed waterproof and waterproofing composition membrane layer operative to self-adhere to said substrate surface and a carrier support sheet adhered to one side of said waterproofing composition membrane layer, the carrier support sheet being positioned opposite the side of the waterproofing membrane adhered to the substrate surface.

3. A method according to claim 1 or 2 wherein the continuous sheet comprises a polyolefin, a polyester, a polyamide, a vinyl polymer, or a combination thereof.

4. A method according to claim 1, 2 or 3 wherein the continuous sheet is at least 0.508 mm (20 mils) thick and has an elongation at break of at least 10% in accordance with ASTM D-412 (1987).

5. A method according to any one of the preceding claims wherein the continuous sheet comprises at least one scrap thermoplastic synthetic polymer material.

6. A method according to claim 5 wherein the continuous sheet further comprises, LDPE, LLDPE, VLDPE, ULDPE, HDPE, polypropylene, EPC, PET, a polyamide, a polyurethane, or a halogenated polymer.

7. A method according to claim 6 wherein the continuous sheet comprises at least one cross-linked polymer.

8. A method according to claim 7 wherein at least one of said polymer materials is an irradiated material.

9. A method according to claim 8 wherein at least one of the polymer materials comprises at least 30% gel content.

10. A method according to any one of claims 6 to 9 wherein the sheet comprises a polyamide in an amount less than 40% by weight of the sheet.

11. A method according to any one of the preceding claims wherein the continuous sheet is a foamed sheet.

12. A method according to claim 11 wherein the continuous sheet comprises at least one reclaim scrap polymer material

13. A method according to claim 11 or 12 wherein the continuous sheet is foamed using a blowing agent, and the sheet comprises cells enclosing blowing agent.

14. A method according to claim 11, 12 or 13 wherein the continuous sheet is a sheet extruded in the presence of a blowing agent and a nucleating agent.

15. A method according to claim 14 wherein the blowing agent is carbon dioxide, butane, pentane, hexane, heptane, dichlorodifluoromethane, or nitrogen, and the nucleating agent is talc, calcium carbonate, sodium bicarbonate, or magnesium oxide.

16. A method according to any one of the preceding claims wherein the continuous sheet is a sheet made by melt screw extrusion of a scrap thermoplastic polymer, an acid polymer, and a base material, the acid polymer and base material being operative when intermixed to produce a gaseous by-product whereby the scrap thermoplastic polymer is foamed during extrusion.

17. A method according to claim 1 wherein the continuous sheet comprises a halogenated polymer which is a vinyl polymer or polyvinylidene chloride.

18. A method according to claim 1 wherein the continuous sheet comprises a cross-linked mixture of ethylene vinyl acetate and linear low density polyethylene.

19. A method according to any one of the preceding claims wherein the substrate surface comprises a sub-grade vertical concrete wall or horizontal concrete surface.

20. A method according to any one of the preceding claims further comprising the step of unrolling the continuous sheet prior to or simultaneous to placing against the waterproofing agent.

21. A method according to any one of the preceding claims wherein the continuous sheet comprises an adhesive operative to adhere the sheet to the waterproofing agent.

22. An impact protection waterproofing structure, comprising: a waterproofing agent layer, and, generally coextensive therewith, an extruded non-friable thermoplastic synthetic polymer sheet comprising opposing major faces and a continuous polymer material integral therebetween, said faces and continuous polymer material comprising at least one scrap thermoplastic material.

23. A structure according to claim 22 wherein the waterproofing agent comprises a preformed waterproofing membrane laminate, and a continuous non-friable extruded thermoplastic sheet as defined in any one of claims 2 to 21.

24. A structure according to claim 23 wherein the continuous sheet comprises a foamed cross-linked polymer material.

25. An impact protected, waterproofed building surface comprising a waterpenetrable surface, a waterproofing membrane layer attached to the surface and operative to minimize penetration by water into the surface, and a continuous non-corrugated sheet comprising an extruded non-friable thermoplastic synthetic polymer material placed against the waterproofing membrane layer, the continuous sheet comprising opposing major faces integrally connected by a continuous matrix comprising extruded non-friable thermoplastic synthetic polymer material.

FIG. 1

FIG. 2

FIG. 3

FIG. 4